# EUROPEAN PATENT APPLICATION

(11) **EP 4 603 233 A1**
(43) Date of publication of application: **20.08.2025**
(21) Application number: 23877230.5
(22) Date of filing: 05.10.2023
(51) Int. Cl.: B25J 9/06, B25J 5/00, B25J 13/00

(54) **HUMANOID ROBOT CONTROL SYSTEM AND PROGRAM**

(30) Priority: 13.10.2022 JP 2022165039; 19.10.2022 JP 2022167928; 28.10.2022 JP 2022173778; 15.11.2022 JP 2022182843; 16.11.2022 JP 2022183405
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/036438
(87) International publication number: WO 2024/080225

(57) **Abstract**

A control system of a humanoid robot includes a humanoid robot including an upper body portion including at least one arm portion, a leg portion placed on a floor, and a coupling portion that rotatably couples the upper body portion to the leg portion, an information acquisition unit that acquires information indicating at least a distance and an angle between the arm portion and an object on which the humanoid robot intends to work, and a control unit that controls rotation of the coupling portion on the basis of the information.

## Description

### Technical Field

The present disclosure relates to a humanoid robot control system and program.

### Background Art

In a production line of a factory, a humanoid robot for automatically performing work is used. Patent Literature 1 discloses attitude control of a humanoid robot.

### Prior Art Document

### Patent Literature

Patent Literature 1: JP 2019 093506 A

### SUMMARY OF INVENTION

### Technical Problem

However, conventional humanoid robots have few freely drivable portions corresponding to human joints. It is not possible to determine a distance or an angle from an object. Therefore, in a case where an object falls from a production line or where an object on which work is to be performed is placed on a floor, a motion of picking up the object cannot be performed. The humanoid robot cannot be diverted to production lines having different heights. Furthermore, there is a possibility of overturning when an operation of pushing or pulling the object in the production line is performed.

The disclosure has been made in view of the above circumstances, and an object thereof is to solve the above problems.

### Solution to Problem

A control system of a humanoid robot according to the disclosed technology includes a humanoid robot including an upper body portion including at least one arm portion, a leg portion placed on a floor, and a coupling portion that rotatably couples the upper body portion to the leg portion, an information acquisition unit that acquires information indicating at least a distance and an angle between the arm portion and an object on which the humanoid robot intends to work, and a control unit that controls rotation of the coupling portion on the basis of the information.

The coupling portion may further couple the leg portion to the upper body portion such that a distance between the leg portion and the upper body portion can be changed. The coupling portion may be configured to be able to tilt the upper body portion with respect to the leg portion as a rotary motion. The coupling portion may be configured to be able to rotate the upper body portion in a horizontal direction of the floor with respect to the leg portion as a rotary motion.

The leg portion may have a balancing function of maintaining balance of the humanoid robot. The leg portion may include a wheel portion with which the humanoid robot is movable.

The control system may further include an intention detection unit that detects an intention of a worker positioned around the humanoid robot. In a case where there is an object on which the humanoid robot intends to work, the control unit may control the rotation of the coupling portion on the basis of the intention of the worker detected by the intention detection unit and the information. The intention detection unit may detect the intention on the basis of a past tendency of the worker.

The control unit may control the rotation of the coupling portion on the basis of the information acquired by the information acquisition unit of the humanoid robot and the information acquired by the information acquisition unit of another humanoid robot. An information request unit that requests the another humanoid robot of the information in a case where the humanoid robot cannot acquire normal information from the information acquisition unit thereof may be included.

A program of the disclosed technology is a program for causing a computer to function as the control unit of the above control system.

The humanoid robot control system according to the disclosed technology gives an instruction to the humanoid robot. The humanoid robot includes an upper body portion including at least one arm portion, a leg portion placed on a floor, and a coupling portion that rotatably couples the upper body portion to the leg portion, an information acquisition unit that acquires information indicating at least a distance and an angle between the arm portion and an object on which the humanoid robot intends to work, and a control unit that controls rotation of the coupling portion on the basis of the information. A humanoid robot control system includes a peripheral information acquisition unit that acquires peripheral information in which the object is placed, a selection unit that selects from types of the leg portion of the humanoid robot on the basis of the peripheral information, and an instruction unit that instructs the humanoid robot of the selected type of the leg portion to perform work on the object.

The types of the leg portion may include a type including a wheel portion with which the humanoid robot is movable, and a type including a walking portion with which the humanoid robot is walkable. The coupling portion may further couple the leg portion to the upper body portion such that a distance between the leg portion and the upper body portion can be changed. The coupling portion may be configured to be able to tilt the upper body portion with respect to the leg portion as a rotary motion. The coupling portion may be configured to be able to rotate the upper body portion in a horizontal direction of the floor with respect to the leg portion as a rotary motion. The leg portion may have a balancing function of maintaining balance of the humanoid robot.

A program according to the disclosed technology is a program for causing a computer to function as the peripheral information acquisition unit, the selection unit, and the instruction unit of the above humanoid robot control system.

The summary of the disclosure described above does not enumerate all the necessary features of the disclosure. A subcombination of this feature group may also be the disclosure.

### BRIEF DESCRIPTION OF DRAWINGS

Fig. 1 is a front view of a humanoid robot.
Fig. 2 is a side view of the humanoid robot.
Fig. 3 is a diagram schematically illustrating an example of a functional configuration of the humanoid robot.
Fig. 4 is a diagram schematically illustrating an example of a processing routine executed by an information processing device.
Fig. 5 is a diagram schematically illustrating an example of a functional configuration of the humanoid robot.
Fig. 6 is a diagram schematically illustrating an example of a processing routine executed by an information processing device.
Fig. 7 is a side view of a humanoid robot.
Fig. 8 is a plane view of the humanoid robot.
Fig. 9 is a diagram schematically illustrating an example of a functional configuration of the humanoid robot.
Fig. 10 is a diagram schematically illustrating an example of a processing routine executed by an information processing device.
Fig. 11 is a diagram schematically illustrating an overall configuration of a humanoid robot control system.
Fig. 12 is a block diagram illustrating a functional configuration of the humanoid robot control system.
Fig. 13 is a flowchart illustrating a flow of processing by the humanoid robot control system.
Fig. 14 is a diagram schematically illustrating an example of a computer hardware that functions as the information processing device.

### DESCRIPTION OF EMBODIMENTS

Hereinafter, embodiments of the disclosed technology will be described, but the following embodiments do not limit the scope of claims. Not all combinations of features described in the embodiments are essential to the solution of the disclosed technology.

### [First Embodiment]

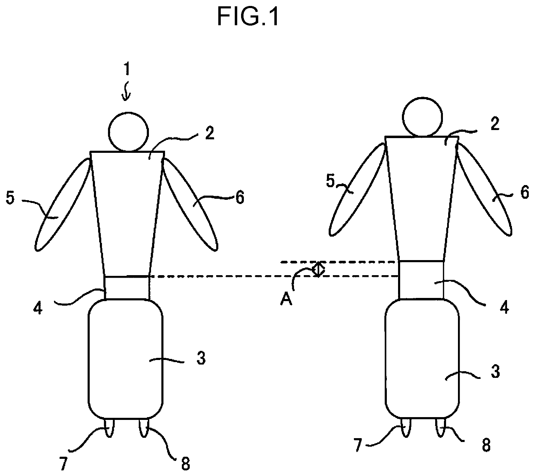

Fig. 1 is a front view of a humanoid robot according to a first embodiment. As illustrated in Fig. 1, a humanoid robot 1 according to this embodiment includes an upper body portion 2, a leg portion 3, and a coupling portion 4 that rotatably couples the upper body portion 2 to the leg portion 3, and is arranged in, for example, a production line or the like of a factory and performs work on an object or the like on the line or on a floor.

The upper body portion 2 includes two arm portions 5 and 6. The arm portions 5 and 6 are rotatably attached to the right and left of the upper body portion 2. A grip portion (not illustrated) for gripping an object is attached to a distal end of each of the arm portions 5 and 6. The number of arm portions is not limited to two, and may be one or three or more.

The leg portion 3 includes two wheels 7 and 8 attached to a lower portion thereof, and is movable on the floor on which the humanoid robot 1 is arranged.

The coupling portion 4 rotatably couples the upper body portion 2 to the leg portion 3. Specifically, the coupling portion 4 includes a tilting mechanism by a motor or a cylinder. As the motor and cylinder, any of electric, hydraulic, and pneumatic systems can be adopted. Therefore, the upper body portion 2 can tilt forward and backward with respect to the leg portion 3.

Here, in the case of the tilting mechanism by the motor, the motor fixed to one of the coupling portion 4 and the upper body portion 2 is driven, so that the other of the coupling portion 4 and the upper body portion 2 tilts. As a result, the upper body portion 2 relatively tilts with respect to the leg portion 3.

In the case of the tilting mechanism by the cylinder, there is a fixing point at which one end of the cylinder is fixed to one of the coupling portion 4 and the upper body portion 2, and there is an operation point at which the other end of the cylinder is fixed to the other of the coupling portion 4 and the upper body portion 2. By operating the cylinder to change a distance between the fixing point and the operation point, the upper body portion 2 relatively tilts with respect to the leg portion 3.

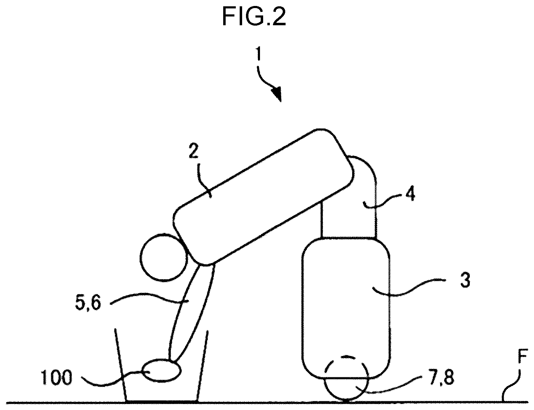

Therefore, as illustrated in Fig. 2, the humanoid robot 1 according to this embodiment can tilt the upper body portion 2 forward with respect to the leg portion 3 to pick up an object 100 placed on a floor F or fallen on the floor F during the work.

The leg portion 3 has a balancing function for preventing the humanoid robot 1 from overturning when the upper body portion 2 tilts forward or backward with respect to the leg portion 3 or the humanoid robot 1 moves.

As illustrated in Fig. 1, the coupling portion 4 has a function capable of changing a distance between the upper body portion 2 and the leg portion 3. Specifically, the coupling portion 4 includes an expansion/contraction mechanism by a motor or a cylinder. As the motor and cylinder, any of electric, hydraulic, and pneumatic systems can be adopted. Therefore, a position of the upper body portion 2 in a vertical direction with respect to the leg portion 3 can be adjusted as indicated by arrow A so as to match a height of a work table in the production line.

Here, in the case of the expansion/contraction mechanism by the motor, a mechanism that converts rotation into a linear motion is provided. When the motor fixed to one of the coupling portion 4 and the upper body portion 2 is driven, the other of the coupling portion 4 and the upper body portion 2 is expanded/contracted. As a result, the upper body portion 2 relatively expands/contracts with respect to the leg portion 3.

In the case of the expansion/contraction mechanism by the cylinder, when the cylinder fixed to one of the coupling portion 4 and the upper body portion 2 is driven, the other end of the cylinder fixed to the other of the coupling portion 4 and the upper body portion 2 expands/contracts. As a result, the upper body portion 2 relatively expands/contracts with respect to the leg portion 3. In the coupling portion 4, a plurality of cylinders may be provided to control both tilting and expansion/contraction.

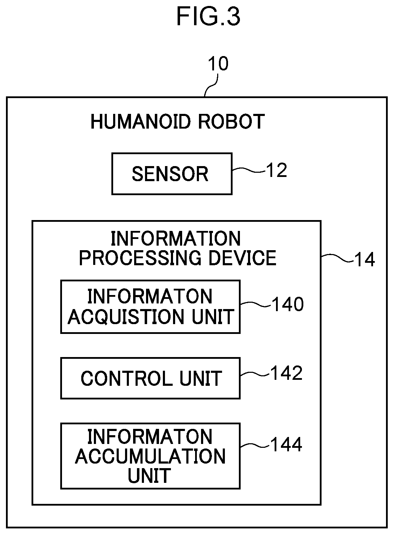

Drive of the humanoid robot 1 according to this embodiment is controlled by a control system 10 mounted in the humanoid robot 1. Fig. 3 is a schematic diagram of an example of the control system of the humanoid robot according to this embodiment. The control system 10 includes a sensor 12 mounted on the humanoid robot and an information processing device 14.

The sensor 12 sequentially acquires information of the object 100 around the humanoid robot 1 on which the humanoid robot 1 works. The information of the object 100 includes information indicating at least a distance and an angle between the object 100 and the arm portions 5 and 6. As the sensor 12, a highest-performance camera, a solid-state LiDAR, a multicolor laser coaxial displacement meter, or a group of various other sensors can be adopted. In addition, examples of the sensor 12 include a vibratory meter, a thermo camera, a hardness meter, a radar, a LiDAR, a high-pixel, telephoto, ultra-wide-angle, 360-degree, high-performance camera, vision recognition, microsound, ultrasonic waves, vibration, infrared rays, ultraviolet rays, electromagnetic waves, temperature, humidity, a spot AI weather forecast, a high-accuracy multi-channel GPS, low-altitude satellite information, long-tail incident AI data or the like.

The sensor 12 detects an image, a distance, vibration, heat, smell, color, sound, an ultrasonic wave, ultraviolet light, infrared light or the like in addition to the above information. In addition, examples of the information detected by the sensor 12 include gravity center movement of the humanoid robot 1, detection of a material of the floor F on which the humanoid robot 1 is installed, outside air temperature detection, outside air humidity detection, detection of an inclination angle in vertical, lateral, and oblique directions of the floor F, moisture content detection or the like. The sensor 12 detects them, for example, every nanosecond.

The information processing device 14 includes an information acquisition unit 140, a control unit 142, and an information accumulation unit 144. The information acquisition unit 140 acquires information of an object detected by the sensor 12. The control unit 142 controls a rotary motion and a moving motion in the vertical direction of the coupling portion 4, a motion of the arm portions 5 and 6 or the like by using the information acquired by the information acquisition unit 140 and artificial intelligence (AI). The control unit 142 executes each following processing, for example.
(1) Driving the coupling portion 4 so that the object 100 on the floor F can be picked up, and tilting the upper body portion 2 forward or backward.
(2) Driving the arm portions 5 and 6 and the grip portion so that the object 100 can be gripped.
(3) Driving the coupling portion 4 so as to match the height of the work table in the production line, and vertically expands/contracts the upper body portion 2 with respect to the leg portion 3.
(4) Balancing in order to prevent the humanoid robot 1 from overturing.
(5) Controlling drive of the wheels 7 and 8 such that the humanoid robot 1 can push a cart or the like.

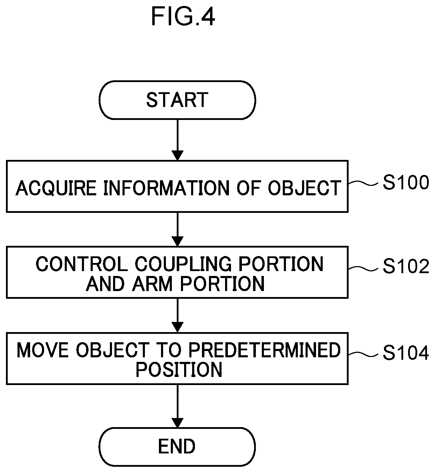

For example, in the case of picking up the object 100 on the floor F, the information processing device 14 repeatedly executes a flowchart illustrated in Fig. 4. At step S100, the information acquisition unit 140 acquires the information of an object detected by the sensor 12. At step S102, the control unit 142 picks up the object 100 on the floor F by controlling the coupling portion 4 and the arm portions 5 and 6 by using the information of an object acquired at step S100 and the AI. At step S104, the control unit 142 moves the picked up object to a predetermined position.

According to this embodiment, the humanoid robot 1 includes the upper body portion 2, the leg portion 3, and the coupling portion 4 that rotatably couples the upper body portion 2 to the leg portion 3. Rotation of the coupling portion 4 is controlled on the basis of the information acquired by the sensor 12. Therefore, the distance and angle between the humanoid robot 1 and the object 100 can be determined, so that a motion of picking up the object 100 on the floor F can be performed.

The distance between the upper body portion 2 and the leg portion 3 can be changed, so that the coupling portion 4 can adjust the position of the upper body portion 2 with respect to the leg portion 3 in the vertical direction so as to match the height of the work table in the production line.

The leg portion 3 has the balancing function for preventing the humanoid robot 1 from overturning when the upper body portion 2 tilts forward or backward with respect to the leg portion 3. Therefore, it is possible to prevent the humanoid robot 1 from overturning when this performs work of pushing or pulling the object 100 in the production line. Therefore, it is possible to prevent a failure of the humanoid robot 1 or an injury or the like of a person around the humanoid robot 1 due to overturning.

### [Second Embodiment]

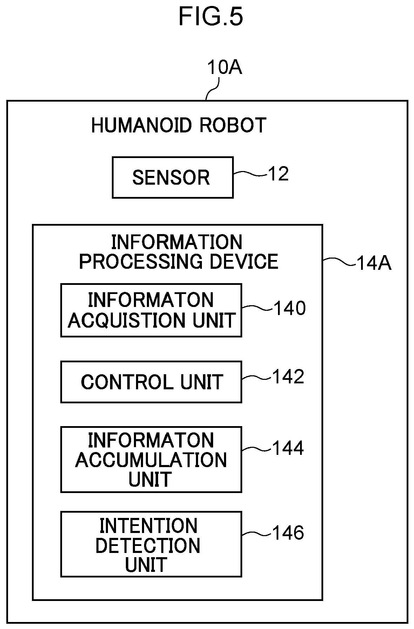

Fig. 5 is a schematic diagram of an example of a control system of a humanoid robot according to a second embodiment. In a control system 10A, an information processing device 14A is different from the information processing device 14 according to the first embodiment described above in further including an intention detection unit 146.

On the basis of a surrounding image of a humanoid robot 1 acquired by the above camera, the intention detection unit 146 detects whether or not there is a worker around the humanoid robot 1, and detects, in a case where there is a worker, an intention of the worker. Here, the "intention" is the intention of the worker as to whether or not to pick up, in a case where there is an object on which the humanoid robot 1 intends to work, specifically, in a case where there is the object 100 placed on a floor F or fallen on the floor F during the work as an example, the object 100.

First, the intention detection unit 146 detects whether or not there is a person, that is, a worker in the surrounding image by analyzing the surrounding image as an example. As an example, in a case where a size of the head, the whole body or the like of a worker detected in the surrounding image is smaller than a predetermined size, the intention detection unit 146 determines that the worker is located away from the humanoid robot 1, that is, the worker is not around the humanoid robot 1.

As an example, the intention detection unit 146 further detects the intention of the worker by detecting a motion of the worker around the humanoid robot 1. Specifically, the intention detection unit 146 detects the motion of the worker on the basis of sequentially acquired surrounding images, and determines that the worker has an intention of picking up the object 100 in a case where it is determined that the worker starts the motion of picking up the object 100 within a predetermined time. Conversely, in a case where the intention detection unit 146 determines that the worker does not start the motion of picking up the object 100 even after the above predetermined time has elapsed, this determines that the worker has no intention of picking up the object 100.

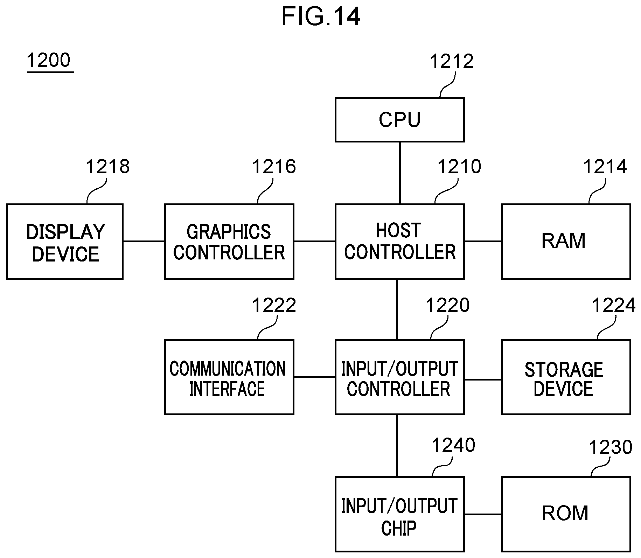

A known technique in image analysis can be used in detecting the motion of the worker based on the sequentially acquired surrounding images. The detection of the intention of the worker is not limited to that by this method described above. For example, the intention detection unit 146 may automatically detect the intention of the worker on the basis of past tendency of the worker. Specifically, it is measured in advance for a plurality of workers, in a case where there is the object 100, whether or not the workers have picked up the object 100, and this is stored in a storage device 1224 (refer to Fig. 14), for example. Information indicating that the worker has the intention of picking up the object 100 is stored in association with the worker whose pickup ratio is 60% or more. It is continuously measured whether or not the object 100 has been picked up, and the information associated with each worker is updated for each measurement.

The intention detection unit 146 can also detect the intention of the worker by referring to information stored in the storage device 1224.

A control unit 142 controls a rotary motion and a moving motion in the vertical direction of a coupling portion 4, a motion of arm portions 5 and 6 or the like by using the intention of the worker detected by the intention detection unit 146, information acquired by an information acquisition unit 140, and artificial intelligence (AI).

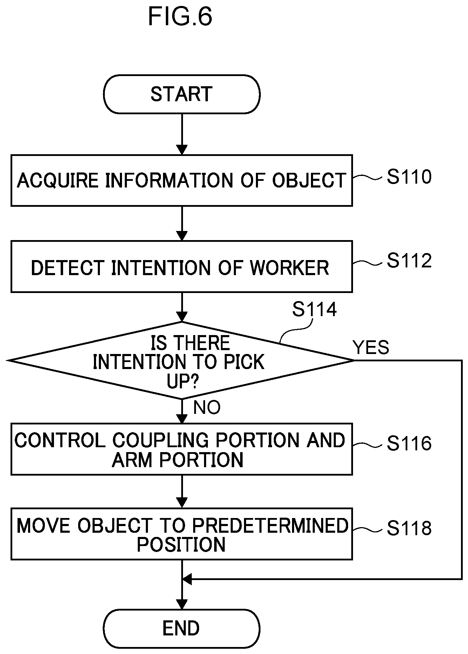

For example, in the case of picking up the object 100 on the floor F, the information processing device 14A repeatedly executes a flowchart illustrated in Fig. 6. At step S110, the information acquisition unit 140 acquires information of the object 100 detected by a sensor 12. At step S112, the intention detection unit 146 detects the intention of the worker as described above. At step S114, in a case where the intention detection unit 146 determines that the worker has an intention of picking up the object 100 (step S114; YES), the procedure ends. In contrast, at step S114, in a case where the intention detection unit 146 determines that the worker has no intention of picking up the object 100 (step S114; NO), the procedure proceeds to step S106. At step S116, the control unit 142 controls the coupling portion 4 and the arm portions 5 and 6 by using the information of the object 100 acquired at step S110 and the AI, thereby picking up the object 100 on the floor F. At step S118, the control unit 142 moves the picked up object 100 to a predetermined position.

According to this embodiment, in a case where there is the object 100 on which the humanoid robot 1 intends to work, the intention of the worker positioned around the humanoid robot 1 can be detected. Therefore, for example, in the case of picking up the object 100 on the floor F, in the case of detecting the intention of the worker to pick up the object 100 on the floor F, it is not necessary to cause the humanoid robot 1 to pick up the object 100, so that the humanoid robot 1 can be prevented from performing an unnecessary motion. In contrast, in the case of detecting that the worker has no intention to pick up the object 100 on floor F, it is possible to cause the humanoid robot 1 to pick up the object 100. In this manner, according to this embodiment, when there is the worker around the humanoid robot 1, it is possible to cause the humanoid robot 1 to perform the motion on the object 100 as necessary.

### [Third Embodiment]

A third embodiment is characterized in adding a rotary motion to the coupling portion 4 of the first embodiment. Hereinafter, a difference from the first embodiment will be described. The same component as that of the first embodiment is denoted by the same reference numeral.

A coupling portion 4 of this embodiment rotatably couples an upper body portion 2 to a leg portion 3. Specifically, in the coupling portion 4, the upper body portion 2 can tilt forward and backward with respect to the leg portion 3 as the rotary motion (refer to Fig. 2). The coupling portion 4 has an extension/contraction function capable of changing a distance between the upper body portion 2 and the leg portion 3 (refer to Fig. 1).

The coupling portion 4 of this embodiment is configured to be able to rotate the upper body portion 2 in a horizontal direction of a surface of a floor F with respect to the leg portion 3 as the rotary motion. Specifically, the coupling portion 4 includes a rotary mechanism by a motor or a cylinder. As the motor and cylinder, any of electric, hydraulic, and pneumatic systems can be adopted.

Here, in the case of the rotary mechanism by the motor, when the motor fixed to one of an upper portion and a lower portion of the coupling portion 4 is driven, the other of the upper portion and the lower portion of the coupling portion 4 rotates. As a result, the upper body portion 2 relatively rotates with respect to the leg portion 3.

In the case of the rotary mechanism by the cylinder, there is a fixing point at which one end of the cylinder is fixed to one of the upper portion and the lower portion of the coupling portion 4, and there is an operation point at which the other end of the cylinder is fixed to the other of the upper portion and the lower portion of the coupling portion 4. By operating the cylinder to change a distance between the fixing point and the operation point, the upper body portion 2 relatively rotates with respect to the leg portion 3.

In the case of the rotary mechanism by the cylinder, since there is a restriction in rotatable angle, in a case where the upper body portion 2 is rotated many times with respect to the leg portion 3, it is preferable to adopt a crank mechanism or select the rotary mechanism by the motor.

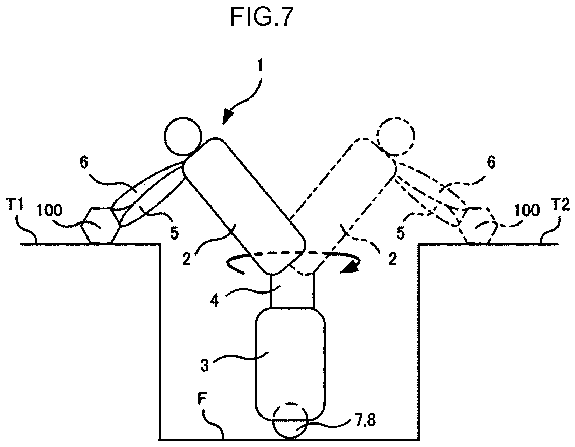

According to the rotary mechanism of the coupling portion 4, the following motion can be performed. As illustrated in Fig. 7, a humanoid robot 1 according to this embodiment can face, from a state of facing a work table T1, a work table T2 on the opposite side of the work table T1 across the humanoid robot 1 by driving the coupling portion 4 to perform a rotary motion in the horizontal direction.

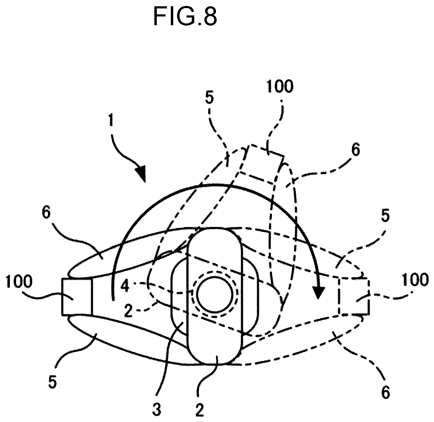

As illustrated in Fig. 8, as the rotary motion in the horizontal direction of the coupling portion 4, it is possible to not only rotate the upper body portion 2 by 180 degrees, but also rotate in a range from 0 to 360 degrees, and stop the upper body portion 2 at any position.

In this embodiment also, drive of the humanoid robot 1 is controlled by a control system 10. Processing according to flowchart illustrated in Fig. 4 or 6 is executed.

For example, a control unit 142 of this embodiment executes each following processing.
(1) Driving the coupling portion 4 so as to match a height of the work table T1 in a production line, and vertically expands/contracts the upper body portion 2 with respect to the leg portion 3.
(2) Driving arm portions 5 and 6 and a grip portion so that an object 100 can be gripped. In this case, the coupling portion 4 is driven if necessary to tilt the upper body portion 2 forward or backward. Wheels 7 and 8 are driven if necessary to adjust a distance between the leg portion 3 and the work table T1.
(3) Balancing in order to prevent the humanoid robot 1 from overturing.
(4) Performing work such as assembly and machining on the object 100 on the work table T1.
(5) Driving the arm portions 5 and 6 and the grip portion to raise the object 100 so that the object 100 is shifted to a next process.
(6) Driving the coupling portion 4 to rotate the upper body portion 2 in the horizontal direction.
(7) Driving the arm portions 5 and 6 and the grip portion to lower the object 100 to the work table T2 on which the next process is performed.

This embodiment has the following operational effects in addition to the operational effects of the first embodiment. The coupling portion 4 of this embodiment is configured to be able to rotate in the horizontal direction in addition to tilting and expansion/contraction operations. Therefore, the humanoid robot 1 can carry the object 100 to a place on a rotary path by rotation of the coupling portion 4, and can successively perform work in a plurality of work places on the rotary path.

In the humanoid robot 1 of this embodiment, a rotary motion of the coupling portion 4 may be performed in a state in which the upper body portion 2 is tilted forward or backward. That is, a motion of raising or lowering the object 100 can be performed.

According to this embodiment, in a case where the upper body portion 2 is rotated in the horizontal direction, even in a case where the height of each work table is different, the work can be performed at a height at which the grip portion is optimal for the work by the expansion/contraction motion of the coupling portion 4. In a case where the upper body portion 2 is rotated in the horizontal direction, even in a case where the distance to each work table is long, it is possible to perform the work at a position at which the grip portion is optimal for the work along with movement by the tilting motion of the coupling portion 4 or the drive of the wheels 7 and 8.

As described above, in a case where the upper body portion 2 tilts or rotates by the coupling portion 4, the above-described balancing function is operated to perform the motion with which the humanoid robot 1 is not overturned. For example, the balancing function maintains the balance by changing tilting and rotation angles of the upper body portion 2. For example, the balancing function drives the wheels 7 and 8 and maintains the balance by driving torque thereof.

### [Fourth Embodiment]

There is a case where a humanoid robot cannot acquire information of an object to be worked due to, for example, poor visibility, sensor abnormality or the like. In this case, there is a possibility that workability of the humanoid robot is deteriorated. A humanoid robot according to a fourth embodiment suppresses a decrease in workability.

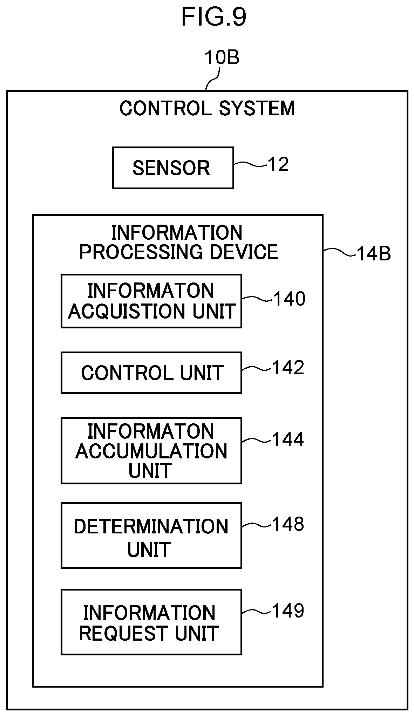

Fig. 9 is a schematic diagram of an example of a control system of the humanoid robot according to the fourth embodiment. In a control system 10B, an information processing device 14B includes an information acquisition unit 140, a control unit 142, an information accumulation unit 144, a determination unit 148, and an information request unit 149.

The information acquisition unit 140 acquires information of an object 100 detected by its own sensor 12. The information acquisition unit 140 can acquire the information of the object 100 detected by a sensor 12 of another humanoid robot 1 through a communication means, for example.

The control unit 142 controls a rotary motion and a moving motion in a vertical direction of a coupling portion 4, a motion of arm portions 5 and 6 or the like by using the information acquired by the information acquisition unit 140 and artificial intelligence (AI). The control unit 142 controls the rotary motion and the moving motion in the vertical direction of the coupling portion 4, the motion of the arm portions 5 and 6 or the like on the basis of the information of the object 100 acquired by the information acquisition unit 140 of a target humanoid robot 1 and the information of the object 100 acquired by the information acquisition unit 140 of another humanoid robot 1.

The determination unit 148 determines whether or not the information acquired by the information acquisition unit 144 is normal information. The normal information is information that does not interfere with work of the humanoid robot 1, and does not include, for example, information that is unclear due to poor visibility, information that cannot be acquired due to sensor abnormality or the like.

In a case where the target humanoid robot 1 cannot acquire the normal information of the object 100 from its own information acquisition unit 140, the information request unit 149 requests another humanoid robot 1 to acquire the information of the object 100.

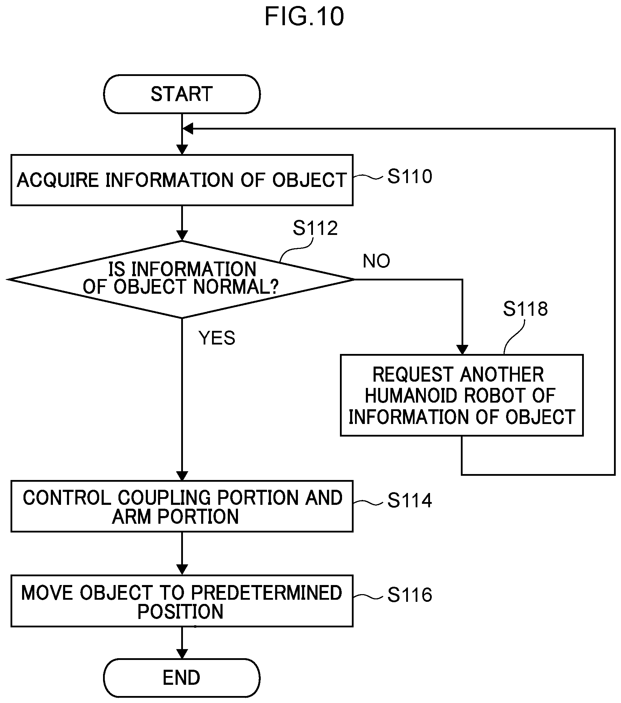

For example, in the case of picking up the object 100 on the floor F, the information processing device 14B repeatedly executes a flowchart illustrated in Fig. 10. At step S120, the information acquisition unit 140 acquires the information of the object 100 detected by the sensor 12. At step S122, the determination unit 148 determines whether or not the information acquired by the information acquisition unit 144 is the normal information. In a case where it is determined that the information acquired by the information acquisition unit 144 is the normal information (YES at step S122), the procedure proceeds to step S124. In a case where it is determined that the information acquired by the information acquisition unit 144 is not the normal information (NO at step S122), the procedure proceeds to step S128. At step S128, the information request unit 149 requests another humanoid robot 1 of the information of the object 100, and the processing returns to step S122. At step S124, the control unit 142 controls the coupling portion 4 and the arm portions 5 and 6 by using the information of the object 100 acquired at step S120 and AI, thereby picking up the object 100 on the floor F. At step S126, the control unit 142 moves the picked up object 100 to a predetermined position.

According to this embodiment, the control unit 142 controls the rotation of the coupling portion 4 on the basis of the information acquired by the information acquisition unit 140 of the humanoid robot 1 and the information acquired by the information acquisition unit 140 of another humanoid robot 1, so that the target humanoid robot 1 is controlled on the basis of the information of the object 100 acquired by itself and the information of the object 100 acquired by another humanoid robot 1. Therefore, the target humanoid robot 1 is controlled on the basis of the information of the object 100 acquired in a different place. As a result, even in a case where the target humanoid robot 1 cannot acquire the information of the object 100 due to, for example, poor visibility, sensor abnormality or the like, the information of the object 100 acquired by another humanoid robot 1 can be acquired. Therefore, workability of the humanoid robot 1 can be improved.

In a case where the humanoid robot 1 cannot acquire the normal information from its own information acquisition unit 140, the target humanoid robot 1 can acquire the normal information by including the information request unit 149 that requests another humanoid robot 1 of the information. Therefore, for example, even in a case where the target humanoid robot 1 cannot acquire the information from its own information acquisition unit 140, or where the information that the target humanoid robot 1 acquires from its own information acquisition unit 140 cannot be used, the target humanoid robot 1 can acquire the normal information. As a result, workability of the humanoid robot 1 can be improved.

### [Fifth Embodiment]

It is preferable to cause a humanoid robot suitable for a situation in which an object is placed to perform work on the object. A humanoid robot control system according to this embodiment causes the humanoid robot suitable for the situation in which the object is placed to perform the work on the object. In this embodiment, a humanoid robot control system that gives an instruction to a plurality of humanoid robots having different leg portion types will be described.

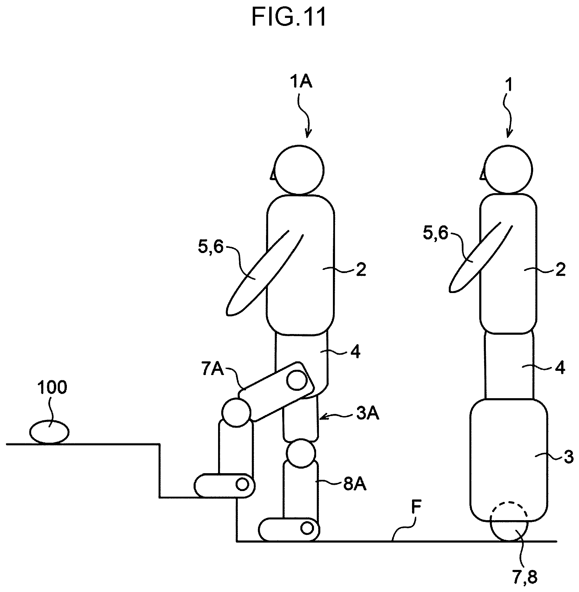

As illustrated in Fig. 11, a leg portion 3A of a humanoid robot 1A includes walking portions 7A and 8A capable of biped walking. The humanoid robot 1A can get over a step by biped walking by the walking portions 7A and 8A. Similarly to the humanoid robot 1, drive of the humanoid robot 1A is controlled by a control system 10 (refer to Fig. 3) mounted therein.

### (Humanoid Robot Control System 20)

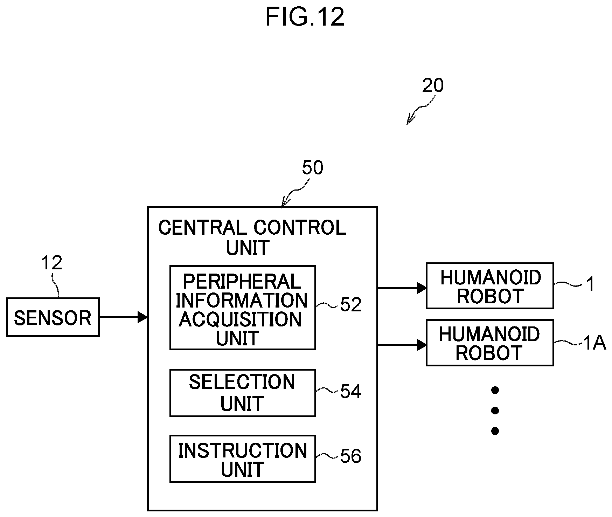

As illustrated in Fig. 12, in a humanoid robot control system 20, information detected by a sensor 12 is input to a central control unit 50, and processing information processed by the central control unit 50 is output to the humanoid robots 1 and 1A.

The sensor 12 includes, for example, a camera, and images peripheral information of the object 100 as an image. The peripheral information imaged by the sensor 12 is input to the central control unit 50. The peripheral information input to the central control unit 50 is not limited to that by the sensor 12 mounted on the humanoid robots 1 and 1A, and may be, for example, that by a camera provided in a factory.

The central control unit 50 is provided in, for example, an external device (server) or one humanoid robot (reader humanoid robot), and includes a peripheral information acquisition unit 52, a selection unit 54, and an instruction unit 56.

The peripheral information acquisition unit 52 acquires the peripheral information input from the sensor 12. The peripheral information acquisition unit 52 acquires the peripheral information of the object 100.

The selection unit 54 selects from types of leg portions 3 and 3A of the humanoid robots 1 and 1A on the basis of the peripheral information acquired by the peripheral information acquisition unit 52. For example, in a case where the object 100 falls on a floor F and there is a step on the floor F, the selection unit 54 selects the humanoid robot 1A including the walking portions 7A and 8A that can get over the step. For example, in a case where the object 100 falls on the floor F and the floor F is flat, the selection unit 54 selects the humanoid robot 1 including wheels 7 and 8 of a fast moving speed.

The instruction unit 56 instructs the humanoid robot 1 or 1A of the selected type of leg portion 3 or 3A to perform work on the object 100.

### (Processing by Central Control Unit 50)

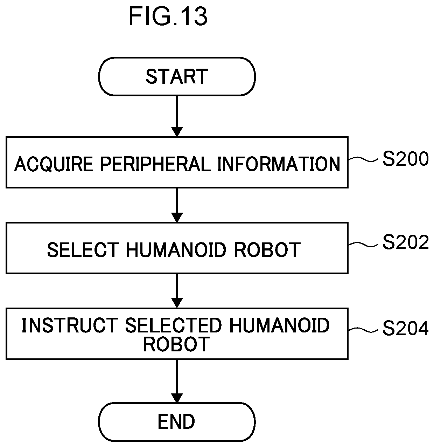

For example, in the case of picking up the object 100 on the floor F, the central control unit 50 executes a flowchart illustrated in Fig. 13. At step S200, the peripheral information acquisition unit 52 acquires the peripheral information input from the sensor 12. At step S202, the selection unit 54 selects from the types of the leg portions 3 and 3A of the humanoid robots 1 and 1A on the basis of the peripheral information acquired by the peripheral information acquisition unit 52. At step S204, the instruction unit 56 instructs the humanoid robot 1 or 1A of the selected type of leg portion 3 or 3A to perform work on the object 100.

According to this embodiment, the humanoid robot 1 or 1A of the selected type of leg portion 3 or 3Ais instructed to perform the work on the object 100 on the basis of the peripheral information in which the object 100 is placed, so that the humanoid robot 1 or 1A of the type of the leg portion 3 or 3A suitable for the situation in which the object 100 is placed is in charge of the work on the object 100. Therefore, for example, as illustrated in Fig. 11, in a case where the object 100 falls on the floor F and there is a step on the floor F, the humanoid robot 1A of the type of leg portion 3A that can get over the step picks up object 100. As a result, it is possible to cause the humanoid robot 1A suitable for the situation in which the object 100 is placed to pick up the object 100.

The types of leg portions 3 and 3A include the type including wheels 7 and 8 with which the humanoid robot 1 is movable, and the type including walking portions 7A and 8A with which the humanoid robot 1A is walkable. Therefore, for example, as illustrated in Fig. 11, in a case where the object 100 falls on the floor F and there is a step on the floor F, the humanoid robot 1A including the walking portions 7A and 8A capable of getting over the step picks up the object 100. For example, in a case where the object 100 falls on the floor F and the floor F is flat, the humanoid robot 1 including the wheels 7 and 8 of a fast moving speed picks up the object 100. As a result, it is possible to cause the humanoid robot 1 or 1A suitable for the situation in which the object 100 is placed to perform work on the object 100.

Fig. 14 schematically illustrates an example of a hardware configuration of a computer 1200 that functions as the information processing device 14. A program installed in the computer 1200 can cause the computer 1200 to function as one or a plurality of "units" of the device according to this embodiment, or cause the computer 1200 to execute an operation associated with the device according to this embodiment or the one or plurality of "units", and/or cause the computer 1200 to execute a process according to this embodiment or a stage of the process. Such program may be executed by a CPU 1212 in order to cause the computer 1200 to execute a specific operation associated with some or all of blocks in the flowchart and block diagrams described in this specification.

The computer 1200 according to this embodiment includes the CPU 1212, a RAM 1214, and a graphics controller 1216, which are interconnected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive or the like. The storage device 1224 may be a hard disk drive, a solid state drive or the like. The computer 1200 also includes an input/output unit such as a ROM 1230 and a keyboard, which are connected to the input/output controller 1220 via an input/output chip 1240.

The CPU 1212 operates according to a program stored in the ROM 1230 and the RAM 1214, thereby controlling each unit. The graphics controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores the program and data used by the CPU 1212 in the computer 1200. The DVD drive reads the program or data from a DVD-ROM or the like and provides the same to the storage device 1224. The IC card drive reads the program and data from an IC card and/or writes the program and data to the IC card.

The ROM 1230 stores therein a boot program or the like executed by the computer 1200 at the time of activation, and/or a program dependent on hardware of the computer 1200. The input/output chip 1240 may also connect various input/output units to the input/output controller 1220 via a USB port, a parallel port, a serial port, a keyboard port, a mouse port or the like.

The program is provided by a computer-readable storage medium such as the DVD-ROM or IC card. The program is read from the computer-readable storage medium, installed in the storage device 1224, the RAM 1214, or the ROM 1230, which are also examples of the computer-readable storage medium, and executed by the CPU 1212. The information processing described in the program is read by the computer 1200 and provides cooperation between the program and the above various types of hardware resources. The device or method may be configured by operation of information or implementation of processing according to use of the computer 1200.

For example, in a case where the communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, storage device 1224, DVD-ROM, or IC card, transmits the read transmission data to the network, or writes reception data received from the network to a reception buffer area or the like provided on the recording medium.

The CPU 1212 may cause the RAM 1214 to read an entire or a necessary portion of a file or database stored in an external recording medium such as the storage device 1224, the DVD drive (DVD-ROM), the IC card or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement or the like, which are described throughout the disclosure and specified by an instruction sequence of a program, and writes back the results in the RAM 1214. The CPU 1212 may search for information in the file, database or the like in the recording medium. For example, in a case where a plurality of entries each having an attribute value of a first attribute associated with an attribute value of a second attribute is stored in the recording medium, the CPU 1212 may search the plurality of entries for an entry in which the attribute value of the first attribute matches a specified condition, read the attribute value of the second attribute stored in the entry, thereby acquiring the attribute value of the second attribute associated with the first attribute satisfying the predetermined condition.

The program or software module described above may be stored in a computer-readable storage medium on the computer 1200 or in the vicinity of the computer 1200. A recording medium such as a hard disk or a RAM provided in a server system connected to a dedicated communication network or the Internet can be used as the computer-readable storage medium, thereby providing the program to the computer 1200 via the network.

The block in the flowchart and block diagram in the present embodiment may represent a stage of a process in which an operation is executed or a "unit" of a device responsible for executing the operation. A specific stage and "unit" may be implemented by a dedicated circuit, a programmable circuit supplied together with a computer-readable instruction stored on the computer-readable storage medium, and/or a processor supplied together with a computer-readable instruction stored on the computer-readable storage medium. Examples of the dedicated circuit may include a digital and/or analog hardware circuit, and may include an integrated circuit (IC) and/or a discrete circuit. Examples of the programmable circuit may include a reconfigurable hardware circuit including, for example, AND, OR, exclusive OR, NAND, NOR, and other logical operations, flip-flops, registers, and memory elements, such as a field programmable gate array (FPGA) and a programmable logic array (PLA).

A computer-readable storage medium may include any tangible device capable of storing an instruction executed by a suitable device, and as a result, the computer-readable storage medium having an instruction stored therein includes a product including instructions that may be executed to create means for executing an operation specified in the flowchart or block diagram. Examples of the computer-readable storage medium may include an electronic storage medium, a magnetic storage medium, an optical storage medium, an electromagnetic storage medium, a semiconductor storage medium or the like. More specific examples of the computer-readable storage medium may include a Floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card or the like.

Examples of the computer-readable instruction may include either a source code or an object code described in any combination of one or a plurality of programming languages, including an assembler instruction, an instruction-set-architecture (ISA) instruction, a machine instruction, a machine-dependent instruction, a microcode, a firmware instruction, state-setting data, or an object oriented programming language such as Smalltalk (registered trademark), JAVA (registered trademark), and C++, and conventional procedural programming languages such as the "C" programming language or similar programming languages.

The computer-readable instruction may be provided to a processor or a programmable circuit of a general purpose computer, a special purpose computer, or other programmable data processing device, locally or over a local area network (LAN) or a wide area network (WAN) such as the Internet in order for the processor or programmable circuit of the general purpose computer, special purpose computer, or other programmable data processing device to execute the computer-readable instruction in order to generate a means for executing an operation specified in the flowcharts or block diagrams. Examples of the processor include a computer processor, a processing unit, a microprocessor, a digital signal processor, a controller, a microcontroller or the like.

Although the technology of the disclosure has been described above with reference to the embodiments, the technical scope of the technology of the disclosure is not limited to the scope described in the above embodiments. It is apparent to those skilled in the art that various modifications or improvements can be made to the above embodiments. It is apparent from recitation in claims that a mode to which such modification or improvement is added can also be included in the technical scope of the technology of the disclosure.

It should be noted that the order of execution of each processing such as operations, procedures, steps, and stages in the devices, systems, programs, and methods recited in claims, described in the specification, and illustrated in the drawings may be implemented in any order unless "before", "prior to" or the like is specifically stated, and unless the output of the previous processing is used in the later processing. Even when the operation flow in claims, the specification, and the drawings is described using "first", "next" or the like for convenience, it does not mean that it is essential to perform in this order.

The disclosures of the Japanese patent applications listed below are incorporated herein by reference in their entirety. All documents, patent applications, and technical standards described in this specification are incorporated herein by reference to the same extent as if each document, patent application, and technical standard were specifically and individually described to be incorporated by reference.
Japanese Patent Application No. 2022-165039 filed on October 13, 2022
Japanese Patent Application No. 2022-167928 filed on October 19, 2022
Japanese Patent Application No. 2022-173778 filed on October 28, 2022
Japanese Patent Application No. 2022-182843 filed on November 15, 2022
Japanese Patent Application No. 2022-183405 filed on November 16, 2022

## Claims

1. A control system of a humanoid robot comprising:
a humanoid robot including an upper body portion including at least one arm portion, a leg portion placed on a floor, and a coupling portion that rotatably couples the upper body portion to the leg portion;
an information acquisition unit that acquires information indicating at least a distance and an angle between the arm portion and an object on which the humanoid robot intends to work;
and a control unit that controls rotation of the coupling portion on the basis of the information.

2. The control system according to claim 1, wherein the coupling portion further couples the leg portion to the upper body portion such that a distance between the leg portion and the upper body portion can be changed.

3. The control system according to claim 1, wherein the coupling portion is configured to be able to tilt the upper body portion with respect to the leg portion as a rotary motion.

4. The control system according to claim 1, wherein the coupling portion is configured to be able to rotate the upper body portion in a horizontal direction of the floor with respect to the leg portion as a rotary motion.

5. The control system according to claim 1, wherein the leg portion has a balancing function of maintaining balance of the humanoid robot.

6. The control system according to claim 1, wherein the leg portion includes a wheel portion with which the humanoid robot is movable.

7. The control system according to claim 1, further comprising:
an intention detection unit that detects an intention of a worker positioned around the humanoid robot, wherein in a case where there is an object on which the humanoid robot intends to work, the control unit controls the rotation of the coupling portion on the basis of the intention of the worker detected by the intention detection unit and the information.

8. The control system according to claim 7, wherein the intention detection unit detects the intention on the basis of a past tendency of the worker.

9. The control system according to claim 1, wherein the control unit controls the rotation of the coupling portion on the basis of the information acquired by the information acquisition unit of the humanoid robot and the information acquired by the information acquisition unit of another humanoid robot.

10. The control system according to claim 9, further comprising:
an information request unit that requests the another humanoid robot of the information in a case where the humanoid robot cannot acquire normal information from the information acquisition unit of the humanoid robot.

11. A program for causing a computer to function as the control unit of the control system according to any one of claims 1 to 10.

12. A humanoid robot control system that gives an instruction to a humanoid robot,
the humanoid robot including:
an upper body portion including at least one arm portion;
a leg portion placed on a floor;
a coupling portion that rotatably couples the upper body portion to the leg portion;
an information acquisition unit that acquires information indicating at least a distance and an angle between the arm portion and an object on which the humanoid robot intends to work;
and a control unit that controls rotation of the coupling portion on the basis of the information,
the humanoid robot control system comprising:
a peripheral information acquisition unit that acquires peripheral information in which the object is placed;
a selection unit that selects from types of the leg portion of the humanoid robot on the basis of the peripheral information; and
an instruction unit that instructs the humanoid robot of the selected type of the leg portion to perform work on the object.

13. The humanoid robot control system according to claim 12, wherein
the types of the leg portion include:
a type including a wheel portion with which the humanoid robot is movable; and
a type including a walking portion with which the humanoid robot is walkable.

14. The humanoid robot control system according to claim 12, wherein the coupling portion further couples the leg portion to the upper body portion such that a distance between the leg portion and the upper body portion can be changed.

15. The humanoid robot control system according to claim 12, wherein the coupling portion is configured to be able to tilt the upper body portion with respect to the leg portion as a rotary motion.

16. The humanoid robot control system according to claim 12, wherein the coupling portion is configured to be able to rotate the upper body portion in a horizontal direction of the floor with respect to the leg portion as a rotary motion.

17. The humanoid robot control system according to claim 12, wherein the leg portion has a balancing function of maintaining balance of the humanoid robot.

18. A program for causing a computer to function as the peripheral information acquisition unit, the selection unit, and the instruction unit of the humanoid robot control system according to any one of claims 12 to 17.
